# EUROPÄISCHE PATENTANMELDUNG

(11) **EP 4 775 406 A1**
(43) Veröffentlichungstag der Anmeldung: **15.07.2026**
(21) Anmeldenummer: 25150842.0
(22) Anmeldetag: 09.01.2025
(51) Int. Cl.: B44C 5/04, B32B 21/02, B32B 21/08, B32B 27/32, B32B 27/36, E04F 15/02

(54) **DEKORPANEEL UND VERFAHREN ZUM HERSTELLEN EINES SOLCHEN**

(71) Anmelder: Akzenta Paneele + Profile GmbH, 56759 Kaisersesch (DE)
(72) Erfinder: HÜLLENKREMER, Felix, 56076 Koblenz (DE); HANNIG, Hans-Jürgen, 51427 Bergisch Gladbach (DE)
(74) Vertreter: Michalski Hüttermann & Partner mbB

(57) **Zusammenfassung**

Die vorliegende Erfindung betrifft ein Dekorpaneel, aufweisend einen Schichtaufbau mit wenigstens einem plattenförmigen Träger (12), eine zumindest auf einen Teilbereich des plattenförmigen Trägers (12) aufgebrachte Primerschicht (14), eine zumindest auf einen Teilbereich der Primerschicht (14) aufgebrachte Druckempfangsschicht (16), eine zumindest auf einem Teilbereich der Druckempfangsschicht (16) aufgebrachte Dekorschicht (20), eine zumindest auf einem Teilbereich der Dekorschicht (20) aufgebrachte Nutzschicht (22), sowie eine auf zumindest einen Teilbereich der Nutzschicht (22) aufgebrachte Lackschicht (26), dadurch gekennzeichnet, dass der plattenförmige Träger (12) aus einem Holzwerkstoff und die Nutzschicht (22) aus einer Polyethylenterephthalat-, Polypropylen-, einer Polyethylen- oder einer Polypropylen/Polyethylencopolymerfolie gebildet ist.

## Beschreibung

Die vorliegende Erfindung betrifft ein Dekorpaneel. Die vorliegende Erfindung betrifft ferner ein Verfahren zum Herstellen eines derartigen Dekorpaneels. Ein derartiges Dekorpaneel erlaubt beispielsweise eine vergrößerte Stabilität.

Unter dem Begriff Dekorpaneel sind im Sinne der Erfindung Wand-, Decken-, Tür-, oder Bodenpaneele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Bisher werden solche Dekorpaneele vielfach als Laminate hergestellt, bei welchen auf eine Trägerplatte ein mit einem gewünschten Dekor vorbedrucktes Dekorpapier aufgebracht wird, auf welches dann wiederum ein sogenanntes Overlay aufgebracht wird. Alternativ kann das Dekor anstatt auf einem Dekorpapier unmittelbar auf einen Träger oder einen hierauf aufgebrachten Druckuntergrund aufgebracht sein. Beispielsweise kann das Dekor mittels Direktdruck aufgebracht werden.

Aus dem Dokument DE 10 2005 042 658 B3 ist beispielsweise eine Bauplatte, insbesondere ein Fußbodenpaneel aus einem Holzwerkstoff, bekannt. Eine derartige Bauplatte umfasst eine Oberseite, eine Unterseite, Verbindungsmittel und umlaufende Seitenflächen. Dabei ist es vorgesehen, dass neben der Oberseite mindestens eine Seitenfläche und mindestens ein Verbindungsmittel mit einem Dekor versehen sind. Ferner offenbart dieses Dokument, dass auf dem Dekor eine Abschlussschicht aus Polyurethan aufgebracht ist.

Das Dokument DE 10 2005 023 661 A1 beschreibt ferner ein Fußbodenpaneel, das eine obere dekorative und abriebfeste Schicht, eine Dämpfungszwischenschicht und einen tragenden Kern umfasst. Die Dämpfungszwischenschicht ist mit einem Klebstoff an dem Kern und der dekorativen und abriebfesten Schicht befestigt und kann beispielsweise aus Polyurethan ausgebildet sein.

Hinsichtlich der Schichtenfolge und der Ausgestaltung der jeweiligen Schichten eines dekorativen Laminats gibt es jedoch noch Raum für Verbesserungen.

Insbesondere wird die Haptik und das Laufgeräusch auf Dekorpaneeloberflächen, welche aus einem klassischen Laminataufbau mit einer im Wesentlichen duroplastischen Oberfläche bestehen, vielfach als kalt und akustisch hart empfunden.

Dies berücksichtigend ist es die Aufgabe der vorliegenden Erfindung, ein Dekorpaneel anzugeben, welches wenigstens ein aus dem Stand der Technik bekanntes Problem zumindest teilweise zu überwinden vermag. Insbesondere ist es die Aufgabe der vorliegenden Erfindung, ein Dekorpaneel anzugeben, welches eine hinsichtlich des haptischen Empfindens und des Laufgeräusches verbesserte Oberfläche aufweist.

Gelöst wir diese Aufgabe durch ein Dekorpaneel gemäß Anspruch 1. Bevorzugte Ausgestaltungen der Erfindung sich in den abhängigen Ansprüchen sowie der weiteren Beschreibung und den Figuren gegeben, wobei die weiteren beschriebenen Merkmale einzeln oder in einer beliebigen Kombination ein Bestandteil der Erfindung sein können, insoweit sich aus dem Kontext nicht explizit das Gegenteil ergibt.

Erfindungsgemäß wird ein Dekorpaneel vorgeschlagen, aufweisend einen Schichtaufbau mit wenigstens
- einem plattenförmigen Träger,
- eine zumindest auf einen Teilbereich des plattenförmigen Trägers aufgebrachte Primerschicht,
- eine zumindest auf einen Teilbereich der Primerschicht aufgebrachte Druckempfangsschicht,
- eine zumindest auf einem Teilbereich der Druckempfangsschicht aufgebrachte Dekorschicht,
- eine zumindest auf einem Teilbereich der Dekorschicht aufgebrachte Nutzschicht, sowie
eine auf zumindest einen Teilbereich der Nutzschicht aufgebrachte Lackschicht, dadurch gekennzeichnet, dass der plattenförmige Träger aus einem Holzwerkstoff und die Nutzschicht aus einer Polyethylenterephthalat-, Polypropylen-, einer Polyethylen- oder einer Polypropylen/Polyethylen-copolymerfolie gebildet ist.

Unter dem Begriff "dekoriertes Wand- oder Bodenpaneel" beziehungsweise "Dekorpaneel" sind im Sinne der Erfindung insbesondere Wand-, Decken, Tür- oder Bodenpaneele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga. Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter einem "Träger" kann insbesondere eine in einem fertig gestellten Paneel als Kern beziehungsweise als Basislage dienende Lage verstanden werden, die insbesondere einen Naturstoff, wie etwa einen Holzwerkstoff, oder einen Faserwerkstoff oder einen Werkstoff umfassend einen Kunststoff aufweisen kann. Beispielsweise kann der Träger dem Paneel bereits eine geeignete Stabilität verleihen oder zu dieser beitragen.

Unter einer Nutzschicht ist im Sinne der vorliegenden Erfindung insbesondere zu verstehen eine Schicht, welche einen Schutz der Oberfläche gegen Verschleiß verbessert. Insbesondere wird durch eine solche Nutzschicht die Abriebfestigkeit verbessert. Erfindungsgemäß ist es vorgesehen, dass die Nutzschicht aus einer Polyethylenterephthalat-, Polypropylen-, einer Polyethylen- oder einer Polypropylen/Polyethylencopolymerfolie gebildet ist. Dabei kann die Polyethylenterephthalat-, Polypropylen-, Polyethylen- oder Polypropylen/Polyethylencopolymerfolie Füllstoffe und/oder Zuschlagsstoffe aufweisen, um beispielsweise die Verschleißfestigkeit der Folie weiter zu erhöhen, die Schlagzähigkeit der Folie oder das Brandverhalten zu verbessern. Die Folie kann grundsätzlich Füllstoffe enthalten, beispielsweise Talkum, Kalziumcarbonat (Kreide), Kaolin, Glimmer, Aluminiumoxid, Kieselgel, Quarzmehl,. Dabei kann die Konzentration des Füllstoffs in einem Bereich zwischen ≥5 Gew.-% und ≤40 Gew.-% liegen, bezogen auf die Gesamtmasse der Polyethylenterephthalat-, Polypropylen-, Polyethylen- oder Polypropylen/Polyethylencopolymerfolie in der Polymermasse. Die unterschiedlichen Füllstoffe erzielen dabei unterschiedliche Vorteile. Talkum steigert die Steifigkeit und Dimensionsstabilität der Folie, Kaolin verbessert die Oberflächenqualität und Glimmer führt neben einer verbesserten Dimensionsstabilität zu einer Verbesserung der Hitzebeständigkeit der Folie. Kreide kann insbesondere als sehr günstiger Füllstoff die Produktionskosten der Folie bei gleichzeitiger Verbesserung der Steifigkeit senken. Auch kann sie in bekannter Weise eingefärbt sein. Die Folie kann darüber hinaus bidirektional gereckt sein, um die Formstabilität der Folie zu verbessern.

Beispiele für geeignete Zuschlagstoffe sind Antioxidationsmittel, UV-Stabilisatoren, Gleitmittel, Antistatikmittel, Flammschutzmittel, Mattierungsmittel, Pigmente, Modifikatoren oder Kompatibibilisatoren,

Geeignete Antioxidationsmittel sind beispielsweise Phenole welche als Primärantioxidant zum Schutz vor thermischer Alterung beitragen können. Phenole können dabei gemäß einer Ausgestaltung der Erfindung in einem Konzentrationsbereich zwischen ≥0,1 Gew.-% und ≤0,5 Gew.-% bezogen auf die Gesamtmasse der Polyethylenterephthalat-, Polypropylen-, Polyethylen- oder Polypropylen/Polyethylencopolymerfolie eingesetzt werden. Solche phenolischen Antioxidantien bieten den Vorteil nicht verfärbende Stabilisatoren für die entsprechenden Polymerzusammensetzungen darzustellen. Sie wirken als Radikalfänger.

Weiter geeignete Antioxidationsmittel sind beispielsweise Phosphite. Diese wirken als Peroxidzersetzer und gewährleisten die Farbretention von oxidationsanfälligen organischen Polymeren, insbesondere während der Verarbeitung. Gemäß einer Ausgestaltung der Erfindung können Phosphite in einer Konzentration zwischen ≥0,05 Gew.-% und ≤0,3 Gew.-% bezogen auf die Gesamtmasse der Polyethylenterephthalat-, Polypropylen-, Polyethylen-oder Polypropylen/Polyethylencopolymerfolie eingesetzt werden.

Geeignete UV-Stabilisatoren sind beispielsweise Benzotriazole. Gemäß einer Ausgestaltung der Erfindung können diese in einer Konzentration zwischen ≥0,1 Gew.-% und ≤0,5 Gew.-% bezogen auf die Gesamtmasse der Polyethylenterephthalat-, Polypropylen-, Polyethylen- oder Polypropylen/Poly-ethylencopolymerfolie eingesetzt werden. Als UV-Absorber sorgen sie dabei für den Schutz vor Photodegradation. Weitere geeignete UV-Stabilisatoren sind beispielsweise Hindered Amine Light Stabilizers (HALS). Diese können gemäß einer Ausgestaltung der Erfindung in einer Konzentration in einem Bereich zwischen ≥0,2 Gew.-% und ≤1,0 Gew.-% bezogen auf die Gesamtmasse der Polyethylenterephthalat-, Polypropylen-, Polyethylen- oder Polypropylen/Poly-ethylencopolymerfolie eingesetzt werden und dienen im Wesentlichen zur Langzeitstabilisierung der Polymerzusammensetzung gegen UV-Strahlung.

Geeignete Gleitmittel sind beispielsweise Stearinsäurederivate. Diese können gemäß einer Ausgestaltung der Erfindung in einer Konzentration in einem Bereich zwischen ≥0,05 Gew.-% und 0,2 Gew.-% bezogen auf die Gesamtmasse der Polyethylenterephthalat-, Polypropylen-, Polyethylen- oder Polypropylen/Polyethylencopolymerfolie eingesetzt werden und dienen der Reduzierung der Reibung bei der Verarbeitung.

Weitere geeignete Gleitmittel sind beispielsweise Polyethylen/Polypropylen-Wachse. Diese können gemäß einer Ausgestaltung der Erfindung in einer Konzentration ein einem Bereich zwischen ≥0,1 Gew.-% und ≤0,5 Gew.-% bezogen auf die Gesamtmasse der Polyethylenterephthalat-, Polypropylen-, Polyethylen- oder Polypropylen/Polyethylencopolymerfolie eingesetzt werden und dienen der Verbesserung der Fließeigenschaften.

Weitere geeignete Gleitmittel sind beispielsweise Polydimethylsiloxan (PDMS). Diese können gemäß einer Ausgestaltung der Erfindung in einer Konzentration ein einem Bereich zwischen ≥0,1 Gew.-% und ≤0,3 Gew.-% bezogen auf die Gesamtmasse der Polyethylenterephthalat-, Polypropylen-, Polyethylen- oder Polypropylen/Polyethylencopolymerfolie eingesetzt werden und dienen der Verbesserung der Gleit- und Antiblockeigenschaften.

Beispiele für erfindungsgemäß vorsehbare Antistatikmittel sind Amine und/oder Ammoniumverbindungen wie beispielsweise quartäre Ammoniumverbindungen wie Tetraalkylammoniumethylsulfate oder Tetraalkylesterammoniumsulfate. Amine und Ammoniumverbindungen können dabei gemäß einer Ausgestaltung der Erfindung in einer Konzentration zwischen ≥0,1 Gew.-% und ≤0,3 Gew.-% bezogen auf die Gesamtmasse der Polyethylenterephthalat-, Polypropylen-, Polyethylen- oder Polypropylen/Polyethylencopolymerfolie eingesetzt werden und dienen der Verringerung der statischen Aufladung.

Weitere Beispiele für erfindungsgemäß vorsehbare Antistatikmittel sind organische Salze wie beispielsweise Natriumacetat, Natriumpropionat, Kaliumhydrogenmaleat, Natriumeitrat oder Kalium-Natrium-Citrat. Gemäß einer Ausgestaltung der Erfindung können diese in einer Konzentration zwischen ≥0,1 Gew.-% und ≤0,5 Gew.-% bezogen auf die Gesamtmasse der Polyethylenterephthalat-, Polypropylen-, Polyethylen- oder Polypropylen/Polyethylencopolymerfolie eingesetzt werden und können insbesondere als feuchtigkeitsabhängige Antistatikmittel dienen.

Als Flammschutzmittel können beispielsweise eine oder mehrere Verbindungen aus der Gruppe bestehend aus Magnesiumhydroxid (MDH), Ammoniumpolyphophat (APP), Melaminpolyphosphat (MPP), Phosphionate, Melamincyanurat (MCA), Antimontrioxid, roter Phosphor und Blähgraphit eingesetzt werden. Dabei kann die Konzentration des eingesetzten Flammschutzmittel in einem Bereich zwischen ≥ 2 Gew.-% und ≤60 Gew.-% bezogen auf die Gesamtmasse der Polyethylenterephthalat-, Polypropylen-, Polyethylen- oder Polypropylen/Polyethylencopolymerfolie liegen. So kann beispielsweise MDH (Magnesiumhydroxid) in einer Konzentration zwischen ≥40 Gew.-% und ≤60 Gew.-% als halogenfreier Flammschutz mit Wasserfreisetzung eingesetzt werden. APP (Ammoniumpolyphosphat) kann beispielsweise in einer Konzentration zwischen ≥15 Gew.-% und ≤25 Gew.-% als intumeszierender Flammschutz eingesetzt werden. MPP (Melaminpolyphosphat) kann beispielsweise in einer Konzentration zwischen ≥10 Gew.-% und ≤20 Gew.-% als stickstoffbasierter Flammschutz eingesetzt werden. Phosphinate können beispielsweise in einer Konzentration zwischen ≥10 Gew.-% und ≤20 Gew.-% eingesetzt werden. MCA (Melamincyanurat) kann beispielsweise in einer Konzentration zwischen ≥2 Gew.-% und ≤10 Gew.-% als Flammschutz für halogenfreie Anwendungen eingesetzt werden. Antimontrioxid kann beispielsweise in einer Konzentration zwischen ≥2 Gew.-% und ≤5 Gew.-% als Synergist für halogenierte Systeme eingesetzt werden. Roter Phosphor kann beispielsweise in einer Konzentration zwischen ≥5 Gew.-% und ≤10 Gew.-% als hochwirksamer Flammschutz eingesetzt werden. Blähgraphit kann als beispielsweise in einer Konzentration zwischen ≥10 Gew.-% und ≤20 Gew.-% als intumeszierender Flammschutz eingesetzt werden. Insbesondere kann es erfindungsgemäß vorgesehen sein, dass Mischungen der zuvor genannten Flammschutzmittel eingesetzt werden. Die Gew.-% Angaben beziehen sich dabei jeweils auf die Gesamtmasse der Polyethylenterephthalat-, Polypropylen-, Polyethylen- oder Polypropylen/Polyethylencopolymerfolie.

Als Mattierungsmittel können beispielsweise in einer Ausgestaltung der Erfindung amorphes Silica, Talkum, Kaolin und/oder Feldspat in der Polymermasse Polyethylenterephthalat-, Polypropylen-, Polyethylen- oder Polypropylen/Polyethylencopolymerfolie enthalten sein. So kann beispielsweise amorphes Silica in einer Konzentration zwischen ≥0,5 Gew.-% und ≤2 Gew.-% bezogen auf die Gesamtmasse der Polyethylenterephthalat-, Polypropylen-, Polyethylen- oder Polypropylen/Polyethylen-copolymerfolie eingesetzt werden. Gemäß einer weitern Ausgestaltung der Erfindung können Talkum, Kaolin, und/oder Feldspat in einer Konzentration zwischen ≥1,0 Gew.-% und ≤5,0 Gew.-% bezogen auf die Gesamtmasse der Polyethylenterephthalat-, Polypropylen-, Polyethylen- oder Polypropylen/Polyethylencopolymerfolie enthalten sein. Insbesonde kann es vorgesehen sein, dass Mischung der zuvor genannten Mattierungsmittel in der Polymermasse der Polyethylenterephthalat-, Polypropylen-, Polyethylen- oder Polypropylen/Polyethylencopolymerfolie enthalten sind.

Erfindungsgemäß vorsehbare Pigmente sind beispielsweise Titandioxid und/oder Ruß. Diese können in einer Konzentration zwischen ≥0,5 Gew.-% und ≤5,0 Gew.-% bezogen auf die Gesamtmasse der Polyethylenterephthalat-, Polypropylen-, Polyethylen- oder Polypropylen/Polyethylencopolymerfolie enthalten sein. Dabei führen die Pigmente neben einer entsprechenden Einfärbung der Folie auch zu einer Verbesserung der UV-Stabilität der Folien.

Erfindungsgemäß vorsehbare Modifikatoren sind beispielsweise amorphe Poly-Alpha-Olefine. Diese können in einer Konzentration zwischen 10 Gew.-% und 30 Gew.-% bezogen auf die Gesamtmasse der Polyethylenterephthalat-, Polypropylen-, Polyethylen- oder Polypropylen/Polyethylen-copolymerfolie in der Polymermasse enthalten sein und dienen zur Erhöhung der Elastizität und zur Homogenisierung. Weitere mögliche Modifikatoren sind beispielsweise Ethylenacrylsäure Copolymere (EAA), Ethylenmethacrylsäure Copolymere (EMA) und/oder Ethlenvinylacetat Copolymere. Diese können beispielsweise in einer Konzentration in einem Bereich zwischen 5 Gew.-% und 15 Gew.-% bezogen auf die Gesamtmasse der Polyethylenterephthalat-, Polypropylen-, Polyethylen- oder Polypropylen/Polyethylencopolymerfolie in der Polymermasse enthalten sein und dienen als Elastizitätsmodifikatoren.

Als Kompatibilisator kann gemäß einer Ausgestaltung der Erfindung Maleinsäureanhydrid (MAH) in einer Konzentration zwischen 0,5 Gew.-% und 3,0 Gew.-% bezogen auf die Gesamtmasse der Polyethylenterephthalat-, Polypropylen-, Polyethylen- oder Polypropylen/Polyethylencopolymerfolie in der Polymermasse enthalten sein und dienen als Haftvermittler und Verträglichkeitsverbesser.

Unter einem "plattenförmigen Träger" kann dabei ferner im Sinne der vorliegenden Erfindung ein Träger verstanden werden, der durch Vereinzelung aus großformatigen Platten (Großplatte) oder Bahn geformt ist und in der Form einer Platte ausgebildet ist. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendlichen Dekorpaneele um ein Mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

Ein Dekorpaneel gemäß der vorliegenden Erfindung weist einen Schichtaufbau auf beziehungsweise ist aus diesem Schichtaufbau ausgebildet. Somit weist das Dekorpaneel eine Mehrzahl aneinander befestigter und aufeinanderfolgender Schichten auf.

Dabei sei grundsätzlich darauf hingewiesen, dass ein Vorliegen einer Schicht auf einer weiteren Schicht beziehungsweise ein Aufbringen einer Schicht auf eine weitere Schicht bedeuten kann, dass die Schicht unmittelbar oder unter Verwendung einer oder mehrerer Zwischenschichten auf der weiteren Schicht vorliegen oder auf die weitere Schicht aufgebracht werden kann.

Eine erste Schicht des Schichtaufbaus, welche etwa die unterste Schicht sein kann, ist ein plattenförmiger Träger. Der plattenförmige Träger kann dabei in an sich bekannterweise für die Herstellung von Dekorpaneelen ausgestaltet sein. In Anhängigkeit des gewünschten Einsatzbereiches der Dekorpaneele kann der Träger aus unterschiedlichen Materialen gefertigt sein. So kann der Träger beispielsweise aus einem Holzwerkstoff bestehen beziehungsweise diesen aufweisen, sofern das Dekorpaneel keiner übermäßigen Feuchtigkeit oder Witterungsbedingungen ausgesetzt ist.

Holzwerkstoffe im Sinne der Erfindung sind dabei neben Vollholzwerkstoffen auch Materialien wie z.B. Brettsperrholz, Brettschichtholz, Stabsperrholz, Funiersperrholz, Furnierschichtholz, Funierstreifenholz und Biegesperrholz. Darüber hinaus sind unter Holzwerkstoffen im Sinne der Erfindung auch Holzspanwerkstoffe wie z.B. Spanpressplatten, Strangpressplatten, Grobspanplatten (Oriented Structural Board, OSB) und Spanstreifenholz sowie auch Holzfaserwerkstoffe wie z.B. Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, z.B. mit Zement, gebundene Holzspanplatten bilden Holzwerkstoffe im Sinne der Erfindung. Auch Kork stellt dabei einen Holzwerkstoff im Sinne der Erfindung dar.

Auf dem Träger ist ein Primerschicht vorgesehen, welcher insbesondere dazu dienen kann, eine Druckempfangsschicht an den Träger anzubinden. Bevorzugt kann die Primerschicht etwa in einer Dicke von ≥ 10µm bis ≤ 60 µm aufgebracht sein. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff vorliegen. Alternativ kann als Primer eine thermisch härtende Zusammensetzung, wie beispielsweise eine Acryllack aufgebracht werden. Auch eine solche thermisch härtende Zusammensetzung kann einen Rheologiemittel wie einen Verdicker, Radikalfänger, Verlaufshilfsmittel, Entschäumer oder Konservierungsmittel, Pigment und/oder einen Farbstoff aufweisen.

Auf die so erhaltende Primerschicht wird erfindungsgemäß eine Druckempfangsschicht aufgebracht. Ein derartiger Druckempfangsschicht ist sowohl für Flexo-Druck, Offset-Druck oder Siebdruckverfahren, als auch insbesondere für Digitaldrucktechniken, wie beispielsweise Inkjet-Verfahren oder Laserdruck-Verfahren geeignet. Zur Aufbringung der Druckempfangsschicht kann es vorzugsweise vorgesehen sein, dass eine Zusammensetzung aufgebracht wird, welche als Komponente wenigstens eine Verbindung ausgewählt aus der Gruppe bestehend aus Polyurethan und/oder Polyester-Acrylat. Darüber hinaus kann die Druckempfangsschicht strahlungshärtbare Epoxy-, Polyether- und/oder Aminoarylate und/oder Polycarbonate enthält. Alternativ kann es vorgesehen sein, dass die Druckempfangsschicht ein Polyurethan-basiertes Hotmelt oder eine wässrige Polyurethandispersionen umfasst. Darüber hinaus kann es vorgesehen sein, dass die Druckempfangsschicht ein Melaminharz, Formaldehydharz, Harnstoffharz, Phenolharz, Epoxidharz, ungesättigtes Polyesterharz, Diallylphthalat oder Mischungen dieser aufweist.

Die Zusammensetzung zur Herstellung eines Druckuntergrundes kann beispielsweise in einer Auftragsmenge zwischen ≥ 5 g/m² und ≤ 40 g/m², vorzugsweise ≥ 10 g/m² und ≤ 30 g/m² aufgetragen werden.

Gemäß einer Ausgestaltung des Verfahrens enthält die Zusammensetzung zur Herstellung der Druckempfangsschicht wenigstens einen Feststoff, wobei dieser eine Verbindung der Gruppe bestehend aus Titandioxid, Bariumsulfat, Bariumoxid, Bariumchromat, Zirconium(IV)oxid, Siliciumdioxid, Aluminiumhydroxid, Aluminiumoxid, Eisenoxid, Eisen(III)hexacyanoferrat, Chromoxid, Cadmiumoxid, Cadmiumsulfid, Cadmiumselenit, Cobaldoxid, Cobaldphosphat, Cobaldaluminat, Vanadiumoxid, Bismutvanadiumoxid, Zinnoxid, Kupferoxid, Kupfersulfat, Kupfercarbonat, Bleiantimonat, Bleichromat, Bleioxid, Bleicarbonat, Calciumcarbonat, Calciumsulfat, Calciumaluminiatsulfat, Zinkoxid, Zinksulfid, Arsensulfid, Quecksilbersulfid, Ruß, Graphit, Zellulosefasern oder Mischungen dieser aufweist. Durch die Verwendung solcher Feststoffe kann insbesondere ein farbiger Druckuntergrund bereitgestellt werden, dessen Farbgebung eine den Dekordruck unterstützende Eigenschaft aufweist. So kann beispielsweise bei einer Dekorgestaltung, welche eine dunkle Holzart repräsentieren soll, ein Druckuntergrund mit einem braunen oder bräunlichen Grundton aufgebracht werden, während bei einer Dekorgestaltung, welche eine helle Holzart oder einen hellen Stein repräsentieren soll, ein Druckuntergrund mit einem gelben oder weißen Grundton aufgebracht werden. Die Verwendung von Zellulosefasern in der auf der Primerschicht aufgebrachten Zusammensetzung zur Ausbildung einer Druckempfangsschicht zeigt dabei insbesondere den vorteilhaften Effekt, dass etwaige Unregelmäßigkeiten auf der Trägerplattenoberfläche, auf welchen die Zusammensetzung aufgebracht wird, nicht mehr auf die später zu bedruckende Oberfläche durchschlagen, was zu einer deutlichen Verbesserung des Druckbildes führt. Solche Unregelmäßigkeiten können beispielsweise Schleifrillen von Schleifen der Trägerplatten oder Abdrücke durch Fördermittel, wie z.B. Transportbänder etc, sein. Bei der Verwendung von Zellulosefasern haben diese bevorzugt eine Korngröße im Bereich zwischen ≥10µm und ≤100µm, insbesondere zwischen ≥25µm und ≤90µm. Der Anteil der Zellulosefaser an dem in der Zusammensetzung enthaltenen Feststoff kann dabei beispielsweise in einem Bereich zwischen ≥0 Gew.-% und ≤100 Gew.-%., vorzugsweise zwischen ≥40 Gew.-% und ≤100 Gew.-%., insbesondere zwischen ≥60 Gew.-% und ≤100 Gew.-%. liegen. Dabei bewegt sich der bevorzugte Anteil an Feststoff in der Zusammensetzung bei der Verwendung von Zellulosefasern am unteren Ende des Gew.-% Bereichs, bevorzugt zwischen 0,5 Gew.-% und 3,5 Gew.-%, insbesondere zwischen 1,0 Gew.-% und 2,5 Gew.-%, wohingegen der bevorzugte Anteil an Feststoff in der Zusammensetzung des Druckempfangsschicht bei den weiteren als beispielsweise geeignet aufgeführten Feststoffen bevorzugt zwischen ≥5 Gew.-% und ≤ 85 Gew.-%, vorzugsweise zwischen ≥10 Gew.-% und ≤ 80 Gew.-%, noch bevorzugter zwischen ≥35 Gew.-% und ≤ 75 Gew.-% liegt. Dies liegt insbesondere in dem geringen spezifischen Gewicht der als Feststoff zusetzbaren Zellulosefasern im Vergleich zu dem spezifischen Gewicht der weiteren aufgeführten Feststoffe begründet.

In einer Ausgestaltung der Erfindung kann vorgesehen sein, dass die Zusammensetzung zur Herstellung einer Druckempfangsschicht wenigstens ein organisches oder anorganisches Pigment ausgewählt aus der Gruppe bestehend aus Berlinerblau, Brillantgelb, Cadmiumgelb, Cadmiumrot, Chromoxidgrün, Cobaltblau, Cobaltcölinblau, Cobaltviolett, Irgazinrot, Eisenoxidschwarz, Manganviolett, Phthalocyaninblau, Terra di Siena, Titanweiß, Ultramarinblau, Ultramarinrot, Umbra, Kaolin, Zirkonium-Silicat-Pigmente, Monoazogelb und Monoazoorange, Thioindigo, beta-Naphthol-Pigmente, Naphthol AS-Pigmente, Pyrazolon-Pigmente, N-Acetessigsäureanilid-Pigmente, Azometallkomplex-Pigmente, Diaryl-Gelb-Pigmente, Chinacridon-Pigmente, Diketopyrrolo-pyrrol-Pigmente (DPP), Dioxazin-Pigmente, Perylen-Pigmente, Isoindolinon-Pigmente, Kupfer-Phthalocyanin-Pigmente und Mischungen dieser aufweist.

Gemäß einer weiteren Ausgestaltung des Verfahrens kann es vorgesehen sein, dass die Zusammensetzung als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Es hat sich überraschenderweise gezeigt, dass bei der Verwendung einer entsprechenden Harzkomponente in Kombination mit dem Feststoffanteil in der Zusammensetzung ein Druckuntergrund bereitgestellt werden kann, welcher eine deutlich verbesserte Haftung einer abschließend aufgebrachten Nutzschicht ermöglicht, was zu einer verbesserten Stabilität des Laminates führt. Die Zusammensetzung kann dabei beispielsweise einen Harzanteil zwischen ≥15 Gew.-% und ≤95 Gew.-%, vorzugsweise zwischen ≥20 Gew.-% und ≤90 Gew.-%, noch bevorzugter zwischen ≥25 Gew.-% und ≤65 Gew.-% aufweisen.

Des Weiteren kann es in einer Ausgestaltung des Verfahrens vorgesehen sein, dass die Zusammensetzung zur Herstellung einer Druckempfangsschicht einen Härter aufweist, wobei der Härter in der Zusammensetzung beispielsweise in einer Konzentration zwischen ≥0,05 Gew.-% und ≤3,0 Gew.-%, vorzugsweise ≥0,15 Gew.-% und ≤2,0 Gew.-%, noch bevorzugter zwischen ≥0,5 Gew.-% und ≤2,0 Gew.-% enthalten ist. Das Vorsehen eines Härters in der Harzzusammensetzung erlaubt es, das Abbinde- bzw. Aushärteverhalten der Harzzusammensetzung in Abhängigkeit zum auf den plattenförmigen Träger aufgebrachten Papier zu optimieren.

Gemäß einer Ausgestaltung des Verfahrens kann der Härter dabei beispielsweise eine Lösung organischer Salze seine. Bevorzugt weist der Härter dabei einen sauren pH-Wert, vorzugsweise zwischen ≥ pH 0,5 und < pH 7, vorzugsweise > pH 0,5 und ≤ pH 6 auf.

In einer besonders bevorzugten Ausgestaltung der Erfindung wird als Härter ein sogenannter latenter Härter eingesetzt. Latente Härter zeichnen sich dadurch aus, dass nach ihrem Zusatz zur Zusammensetzung einerseits eine ausreichende Verarbeitungszeit bei Zimmertemperatur, andererseits eine möglichst kurze Härtungszeit bei den anschließenden Verarbeitungstemperaturen erzielt wird. Die Wirkung der latenten Härter beruht darauf, dass sie bei gewöhnlicher Temperatur unwirksam sind und erst bei erhöhter Wärme oder aufgrund einer chemischen Reaktion eine Säure freisetzen, die den Härtungsvorgang beschleunigt. Beispiele für latente Härter sind unter anderem Alkyl- oder Alkanolaminsalze der schwefeligen Säure, Amidosulfonsäure, 3-Chlor-1,2-propandiol, p-Toluolsulfonsäure, Morpholin, Ammoniumsulfat, Ammoniumchlorid, Ammoniumsulfit, Ammoniumnitrat, Ethanolaminhydrochlorid, Dimethylethanolammoniumsulfit, Diethanolammoniumsulfamat oder Maleinsäure.

Die Zusammensetzung kann neben den zuvor genannten Bestandteilen weiter Bestandteile bzw. Additive wie beispielsweise Rheologiemittel zur Einstellung der Viskosität, Wasser, Fließverbesserer, Konservierungsmittel, Tenside, Schaumverhinderer oder dergleichen enthalten.

Die Zusammensetzung zur Ausbildung der Druckempfangsschicht kann beispielsweise mit einer Auftragsmenge zwischen ≥5 g/m² und ≤50 g/m², vorzugsweise ≥10 g/m² und ≤40 g/m² aufgetragen werden. Gemäß einer weiteren Ausgestaltung kann die Zusammensetzung dabei auch in wenigstens zwei Auftragungsstufen aufgetragen werden.

Gemäß einer bevorzugten Ausgestaltung des Verfahrens kann es insbesondere vorgesehen sein, dass die Zusammensetzung zur Herstellung der Druckempfangsschicht mit einer Viskosität, die einer Auslaufzeit zwischen ≥7 s und ≤60 s aus einem Normauslaufbecher entspricht, aufgetragen wird. Die Viskosität ist bei gemäß DIN 53211 mittels eines Auslaufbechers mit einer Auslaufdüsenweite von 4mm bestimmt.

Nach dem Auftrag der Zusammensetzung zur Ausbildung einer Druckempfangsschicht folgt bevorzugt ein Trocknungs- oder Teilhärtungsschritt, bei welchem die anschließend zu bedruckende Oberfläche zumindest teilweise getrocknet wird. Dazu kann es vorgesehen sein, dass auf der Oberfläche, auf welche die Harzzusammensetzung aufgetragen wurde, eine Oberflächentemperatur zwischen ≥75°C und ≤125 °C, vorzugsweise zwischen ≥80°C und ≤110 °C, insbesondere zwischen ≥90°C und ≤100 °C erzeugt wird. Zur Erzeugung einer entsprechenden Oberflächentemperatur sind beispielsweise IR-Strahler, NIR-Strahler, Düsentrockner oder vergleichbare Einrichtungen geeignet. Die genannte Oberflächentemperatur wird dabei bevorzugt für einen Zeitraum zwischen ≥1 s und ≤600 s, vorzugsweise zwischen ≥5s und ≤400s, noch bevorzugter zwischen ≥10 s und ≤300 s eingestellt.

Im Falle einer strahlungshärtbaren Zusammensetzung zur Ausbildung einer Druckempfangsschicht erfolgt die zumindest teilweise Härtung der aufgetragenen Zusammensetzung vorzugsweise mittels UV-Strahlung oder Elektronenstrahlung. Dabei kann es insbesondere vorgesehen sein, dass mehrere UV-Strahlungsquellen mit unterschiedlichen Emissionsmaxima eingesetzt werden oder eine sequentielle Härtung mittels mehrerer Elektronenbeschleuniger, vorzugsweise unterschiedlicher Leistung, erfolgt.

Gemäß einer bevorzugten Ausgestaltung der Erfindung kann es vorgesehen sein, dass die Primerschicht und die Druckempfangsschicht integral ausgebildet sind, und mithin als eine einzige Schicht aufgetragen werden, die die Eigenschaften der Primerschicht und der Druckempfangsschicht in sich vereinigt.

Als weitere Schicht des Schichtaufbaus beziehungsweise des Schichtverbunds ist eine auf der Druckempfangsschicht aufgebrachte Dekorschicht vorgesehen. Beispielsweise kann die Dekorschicht eine Druckschicht umfassen beziehungsweise aus dieser ausgestaltet sein und etwa aus dieser bestehen. Als solche kann die Dekorschicht etwa aufgebracht werden mittels eines Direktdruckverfahrens. Unter dem Begriff "Direktdruck" wird im Sinne der Erfindung das Aufbringen eines Dekors direkt auf den Träger eines Paneels oder auf eine auf dem Träger aufgebrachte Primerschicht bzw. Druckempfangsschicht verstanden. Entgegen den konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Oberflächenbeschichtung bzw. der Paneel-Herstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren oder Laserdruck-Verfahren eingesetzt werden.

Bevorzugt wird zur Aufbringung der Dekorschicht insbesondere mittels Direktdruckverfahren eine strahlungshärtbare Farbe und/oder Tinte eingesetzt. Strahlungshärtbar bedeutet dabei im Sinne der Erfindung, dass die Farbe und/oder Tinte mit elektromagnetischer Strahlung, wie z.B. UV-Strahlung oder Elektronenstrahlung gehärtet wird. Dabei kann es insbesondere vorgesehen sein, dass die Farbe und/oder Tinte entsprechende strahlungs- bzw. photoinduziert polymerisierende Bestandteile aufweist. Beispiele für geeignete Bestandteile sind Acrylate, Epoxide oder cyclische Amine, wie z.B. Ethylenimin.

Die Dekorschicht kann beispielsweise in einer Dicke in einem Bereich von ≥ 5µm bis ≤ 10µm aufgebracht sein.

Es kann ferner vorgesehen sein, neben einer bezüglich Farbe und/oder Struktur positiven Abbildung ferner auch eine entsprechende negative Abbildung der Dekorvorlage aufzubringen. Im Detail kann, wie es beispielsweise von einem Positiv-Beizen beziehungsweise Negativ-Beizen für Holzwerkstoffe bekannt ist, durch die Verwendung von digitalen Daten der Farbeindruck beispielsweise einer Maserung umgekehrt werden, so dass bezüglich der Farbe beziehungsweise insbesondere helleren und dunkleren Bereichen ein Negativ entsteht. Entsprechendes ist neben dem Farbeindruck ebenfalls für die aufgebrachte Struktur möglich, so dass auch bezüglich der strukturellen Ausgestaltung ein Negativ realisierbar ist. Auch derartige Effekte sind auf Basis digitaler dreidimensionaler Daten problemlos und ohne Vorlaufzeit beziehungsweise Umbauten in einen Herstellungsprozess integrierbar.

Insbesondere zum Schutz der aufgebrachten Dekorschicht ist es ferner vorgesehen, dass der Schichtaufbau beziehungsweise das Dekorpaneel zumindest eine auf die Dekorschicht aufgebrachte Nutzschicht, die als Deck- und/oder Verschleißschicht dienen aufweist. Die Nutzschicht im Sinne der Erfindung ist eine Schicht, welche insbesondere die Dekorschicht vor Abnutzung oder Beschädigung durch Schmutz, Feuchtigkeitseinfluss oder mechanische Einwirkungen, wie beispielsweise Abrieb, schützt. Erfindungsgemäß ist es dabei vorgesehen, dass die Nutzschicht aus einer Polyethylenterephthalat-, Polypropylen-, einer Polyethylen-oder einer Polypropylen/Polyethylencopolymerfolie gebildet ist. Dabei kann die Polypropylen-, Polyethylen- oder Polypropylen/Polyethylencopolymerfolie eine Stärke in einem Bereich zwischen ≥ 0,05mm und ≤ 20 mm, bevorzugt zwischen ≥ 0,1mm und ≤ 10 mm, weiter bevorzugt ≥ 0,2mm und ≤ 1mm, insbesondere zwischen ≥ 0,25mm und ≤ 0,4mm aufweisen. Vorzugsweise kann die Polyethylenterephthalat-, Polypropylen-, Polyethylen-oder Polypropylen/Polyethylencopolymerfolie wie zuvor ausgeführt Füllstoffe und/oder Zuschlagsstoffe aufweisen, um beispielsweise die Verschleißfestigkeit der Folie weiter zu erhöhen, die Schlagzähigkeit der Folie oder das Brandverhalten zu verbessern. Die Folie kann grundsätzlich übliche Füllstoffe enthalten, beispielsweise Kalziumcarbonat (Kreide), Aluminiumoxid, Kieselgel, Quarzmehl, Holzmehl, Gips. Auch kann sie in bekannter Weise eingefärbt sein. Die Folie kann darüber hinaus bidirektional gereckt sein, um die Formstabilität der Folie zu verbessern.

Gemäß einer Ausgestaltung der Erfindung kann es vorgesehen sein, dass die Nutzschicht aus einer mehrlagigen Polyethylenterephthalat-, Polypropylen-, Polyethylen- oder Polypropylen/Polyethylencopolymerfolie gebildet ist. Dabei kann es vorgesehen sein, dass die unterschiedlichen Folienlagen der Nutzschicht aus Folien unterschiedlicher Eigenschaften und/oder Zusammensetzungen gebildet werden, so dass beispielsweise Folienaufbauten des Typs A-B, A-B-A, A-B-C, A-B-C-B-A oder A-B-C-A erzielt werden. Dabei können solche Folienaufbauten durch Coextrusion unterschiedlicher Polymerzusammensetzung oder durch das Kaschieren und/oder Laminieren unterschiedlicher Folien miteinander erzielt werden.

Dabei kann es vorgesehen sein, dass beispielsweise eine erste Folienlage A als Dämpfungsschicht ausgebildet ist und einen Biege-E-Modul ≤800 MPa aufweist und somit weichelastisch ist. Vorzugsweise liegt eine solche weichelastische Schicht im Folienaufbau in der Mitte oder in der zur Dekorschicht gerichteten Fläche des Folienaufbaus. Eine weitere Folienlage B kann dabei als Folienlage mit einem möglichst hohen Biege-E-Modul ≥1800 MPa oder sogar ≥2000 MPa ausgebildet sein, um etwaig auftretende Punktlasten, wie sie beispielsweise durch Möbelfüße oder schmale Absätze verursacht werden, abzufangen und Resteindrucke zu verhindern.

Gemäß einer weiteren Ausgestaltung der Erfindung kann es vorgesehen sein, dass zwischen dem plattenförmigen Träger und der Primerschicht und/oder zwischen der Primerschicht und der Druckempfangsschicht eine Dämpfungsschicht vorgesehen ist. Dabei kann es sich um eine Folienlage handeln welche einen Biege-E-Modul ≤800 MPa aufweist oder auch um eine Schicht aus einem Naturstoff, wie beispielsweise Kork, welche mittels einer geeigneten Klebezwischenlage mit der jeweils im Schichtaufbau darunter und darüberliegenden Schicht verbunden ist. Im Falle einer Folienlage kann diese darüber hinaus zur Verbesserung der akustischen Dämpfungseigenschaften geschäumt sein. Dabei zeigt eine solche geschäumte Dämpfungsschicht eine elastische Verformbarkeit mit einer möglichst hohen Rückstellkraft, so dass die Schicht nach Entlastung einer Lasteinwirkung wieder in ihre Ausgangsform zurückkehrt.

Darüber hinaus ist es erfindungsgemäß vorgesehen, dass auf die Nutzschicht wenigstens eine Lackschicht aufgebracht ist, etwa als strahlungshärtebare oder zumindest teilweise strahlungshärtebare Zusammensetzung, beispielsweise auf Basis einen Acrylat-Lackes, eines Epoxid-Lackes, oder eines Urethanacrylates. Dabei kann es insbesondere bevorzugt sein, dass die Zusammensetzung nach dem Auftrag auf die Nutzschicht in einem ersten Schritt strahlungsinduziert nur teilweise gehärtet wird und in teilgehärtete Schicht in der zuvor beschriebenen Weise eine mit dem Dekor übereinstimmende Oberflächenstrukturierung eingebracht wird.

Beispielsweise kann es dabei vorgesehen sein, dass zwei Lackschichten vorgesehen sind, beziehungsweise dass die Lackschicht zweischichtig ausgestaltet ist. Dabei können die Schichten aus dem gleichen Material, insbesondere Lack, oder aus verschiedenen Materialien, wie insbesondere aus verschiedenen Lacken, gefertigt sein. Ein geeigneter Lack kann beispielsweise ein UV-härtender Lack, wie beispielsweise ein Acryllack beziehungsweise ein acrylbasierter Lack sein. Dabei kann eine untere Schutzschicht eine Struktur aufweisen und die obere Schutzschicht die untere Schutzschicht bedecken. In dieser Ausgestaltung kann es vorgesehen sein, dass die untere Schicht beim Auftrag eine vergleichsweise höhere Viskosität aufweist, um Strukturen auch vor dem Härten stabil halten zu können, und/oder dass die obere Schicht eine vergleichsweise niedrige Viskosität aufweist, um einen einheitlichen Abschluss bilden zu können. Ferner kann es vorgesehen sein, dass die untere Schicht eine größere Dicke aufweist, als die obere Schicht. So kann die untere Schicht, die als Strukturlack dienen kann, etwa in einer Auftragsmenge von ≥ 30 g/m² bis ≤ 40 g/m² aufgetragen sein, wohingegen die obere Schicht, die als Decklack dienen kann, etwa in einer Auftragsmenge von ≥ 10 g/m² bis ≤ 15 g/m² aufgetragen sein kann.

Bezüglich der Lackschicht kann es ferner vorgesehen sein, dass diese Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann es vorgesehen sein, dass der Hartstoff in einer Menge zwischen 5 Gew.-% und 40 Gew.-%, vorzugsweise zwischen 15 Gew.-% und 25 Gew.-% in der Schutzschichtzusammensetzung enthalten ist. Vorzugsweise weist der Hartstoff dabei einen mittleren Korndurchmesser zwischen 10 µm und 250 µm, weiter vorzugsweise zwischen 10µm und 100µm auf. Hierdurch wird vorteilhafterweise erreicht, dass die Schutzschichtzusammensetzung eine stabile Dispersion ausbildet und eine Entmischung bzw. ein Absetzten des Hartstoffes in der Schutzschichtzusammensetzung vermieden werden kann. Zur Ausbildung einer entsprechenden Schutzschicht ist es in einer Ausgestaltung der Erfindung vorgesehen, dass die Hartstoff enthaltende und strahlungshärtbare Zusammensetzung in einer Konzentration zwischen 10 g/m² und 300 g/m², vorzugsweise zwischen 50 g/m² und 250g/m² aufgetragen wird. Dabei kann die Auftragung beispielsweise mittels Walzen, wie Gummiwalzen oder mittels Gießvorrichtungen aufgetragen werden. In einer weiteren Ausgestaltung der Erfindung kann es vorgesehen sein, dass der Hartstoff zum Zeitpunkt des Auftrages der Verschleißschichtzusammensetzung nicht in der Zusammensetzung enthalten ist, sondern als Partikel auf die aufgetragenen Verschleißschichtzusammensetzung aufgestreut wird und diese im Anschluss gehärtet wird.

Weiter kann es vorgesehen sein, dass in die Lackschicht eine mit dem Dekor übereinstimmende Oberflächenstrukturierung eingebracht ist. Unter einer mit dem Dekor übereinstimmenden Oberflächenstrukturierung ist zu verstehen, dass die Oberfläche des Dekorpaneels eine haptisch wahrnehmbare Struktur aufweist, welche in ihrer Form und ihrem Muster dem aufgebrachten Dekor entspricht, um so eine möglichst originalgetreue Nachbildung eines natürlichen Werkstoffes auch hinsichtlich der Haptik zu erhalten.

Dabei kann es insbesondere vorgesehen sein, dass eine Strukturierung der Lackschicht nach dem Auftrag der Lackschicht erfolgt. Hierzu kann es bevorzugt vorgesehen sein, dass als Lackschicht eine härtbare Zusammensetzung aufgetragen wird und ein Aushärtungsprozess nur in dem Maße erfolgt, dass lediglich eine Teilhärtung der Lackschicht erfolgt. In die so teilgehärtete Schicht wird mittels geeigneter Werkzeuge, wie beispielsweise einer Hartmetall-Strukturwalze oder eines Stempels beziehungsweise einer Presse, wie etwa einer Kurztaktpresse, eine gewünschte Oberflächenstruktur eingeprägt. Dabei erfolgt die Prägung bevorzugt in Übereinstimmung mit dem aufgebrachten Dekor, wie dies vorstehend beschrieben ist.

Gemäß einer Ausgestaltung der Erfindung kann es vorgesehen sein, dass die in die Lackschicht eingebrachte Strukturierung bis in die Nutzschicht reicht. Mithin kann es vorgesehen sein, dass die Strukturen durch die Lackschicht hindurch bis in die die Nutzschicht bildende Polyethylenterephthalat-, Polypropylen-, Polyethylen- oder Polypropylen/Polyethylen-copolymerfolie geprägt werden.

Weiter kann es vorgesehen sein, dass die Lackschicht aus einer strahlungshärtbaren Zusammensetzung gebildet ich, welche zur Aushärtung mit wenigstens zwei unterschiedlichen Wellenlängen bestrahlt wurde. Hierdurch kann insbesondere eine verbesserte Stabilität der Lackschicht sowie ein verbesserter optischer Eindruck der Schicht erreicht werden.

In einer weiteren bevorzugten Ausgestaltung des erfindungsgemäßen Dekorpaneels weist dieses auf der dem Dekor gegenüberliegenden Seite des plattenförmigen Trägers eine Trittschalldämmung auf. Dabei kann es insbesondere vorgesehen sein, dass die Trittschalldämmung zumindest teilweise aus einem rezyklierten Material gebildet ist, vorzugsweise mit einem Rezyklatanteil ≥ 80 Gew.-%, weiter vorzugsweise ≥ 90 Gew.-%, insbesondere ≥ 95 Gew.-%. Dabei weist die Trittschalldämmung als Hauptbestandteil vorzugsweise ein Zellstoff- bzw. Holzstoffmaterial, wie beispielsweise eine Pappe oder ein Zellstoffvlies auf.

Die Grammatur des als Trittschalldämmung eingesetzten Materials kann gemäß einer Ausgestaltung der Erfindung in einem Bereich von ≥420 g/m² bis ≤580 g/m², vorzugsweise ≥460 g/m² bis ≤530 g/m² liegen und eine Dicke in einem Bereich zwischen ≥0,8mm und ≤1,5mm, vorzugsweise zwischen ≥0,95mm und ≤1,1mm aufweisen.

Der pH-Wert des als Trittschalldämmung eingesetzten Materials kann gemäß einer Ausgestaltung der Erfindung in einem Bereich von ≥pH 6 bis ≤pH 8, insbesondere ≥pH 6,5 bis ≤pH 7,5 liegen.

Besonders bevorzugt liegt die Restfeuchtigkeit des als Trittschalldämmung eingesetzten Materials im Moment der Verarbeitung in einem Bereich zwischen ≥ 6% und ≤7,5%.

Weiter bevorzugt ist das als Trittschalldämmung eingesetzte Material mit einem Fungizid ausgerüstet und im Wesentlichen wasserabweisend.

Darüber hinaus kann es vorgesehen sein, dass das als Trittschalldämmung eingesetzte Material mit einem Pigment, wie beispielsweise Ruß und/oder Titandioxid eingefärbt ist.

Gemäß einer weiteren Ausgestaltung der Erfindung kann der insbesondere plattenförmige Träger zumindest in einem Randbereich eine Profilierung aufweisen. Dabei kann es insbesondere vorgesehen sein, dass das Dekor auch im Bereich der Profilierung aufgebracht ist, so dass die Profilierung vor dem Aufbringen der Dekorschicht auf den plattenförmigen Träger erfolgt. Alternativ oder ergänzend kann eine Profilierung auch nach dem Aufbringen der Dekorschicht erfolgen. Bei einer Profilierung im Sinne der Erfindung ist es vorgesehen, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird.

Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.

Gemäß einer bevorzugten Ausgestaltung der Erfindung kann es vorgesehen sein, dass das Dekorpaneel jeweils gegenüberliegende lange und kurze Kanten aufweist, welche mit Verbindungsmitteln zur Verbindung wenigstens zweier Dekorpaneele miteinander ausgebildet sind. Dabei kann vorgesehen sein, dass zumindest die Nutzschicht an wenigstens einer Kante in Richtung der Kante einen Überstand ausbildet, welcher derart zumindest über die unter der Nutzschicht liegende Dekorschicht hinausragt, dass im verbundenen Zustand zweier Dekorpaneele miteinander die Nutzschichten der verbundenen Dekorpaneele kontaktschlüssig aneinanderstoßen.

Weiter kann es in einer solchen Ausgestaltung der Erfindung vorgesehen sein, dass
das Dekorpaneel an jeweils einer langen und einer kurzen Kante den Überstand aufweist und an den jeweils anderen langen und kurzen Kanten einen Rücksprung in der Nutzschicht aufweist. Der Überstand und der Rücksprung sind derart ausgestaltet, dass im verbundenen Zustand zweier Dekorpaneele der Überstand eine obere Stoßkante zwischen den Dekorpaneelen überbrückt und an die Nutzschicht des verbundenen Dekorpaneels im Bereich des Rücksprunges kontaktschlüssig anstößt.

Insbesondere kann dabei vorgesehen sein, dass der Überstand und der Rücksprung derart ausgestaltete sind, dass im verbundenen Zustand zweiter Dekorpaneele der Überstand und der Rücksprung eine sich überlappende V-förmige geschlossene Fuge ausbilden.

Mit Bezug auf weitere technische Merkmale und Vorteile des vorbeschriebenen Dekorpaneels wird Bezug genommen auf die nachfolgende Beschreibung des Verfahrens, auf die Figuren sowie die Beschreibung der Figuren.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken.
Fig. 1 zeigt den schematischen Aufbau einer Ausgestaltung eines Dekorpaneels gemäß der Erfindung;
Fig. 2 zeigt den schematischen Aufbau einer weiteren Ausgestaltung eines Dekorpaneels gemäß der Erfindung;
Fig. 3 zeigt den schematischen Aufbau einer weiteren Ausgestaltung eines Dekorpaneels gemäß der Erfindung;
Fig. 4 zeigt den schematischen Aufbau einer weiteren Ausgestaltung eines Dekorpaneels gemäß der Erfindung;
Fig. 5 zeigt den schematischen Aufbau einer weiteren Ausgestaltung eines Dekorpaneels gemäß der Erfindung;
Fig. 6 zeigt eine Ausgestaltung eines erfindungsgemäßen Dekorpaneels mit im verbundenen Zustand kontaktschlüssigen Nutzschichten.

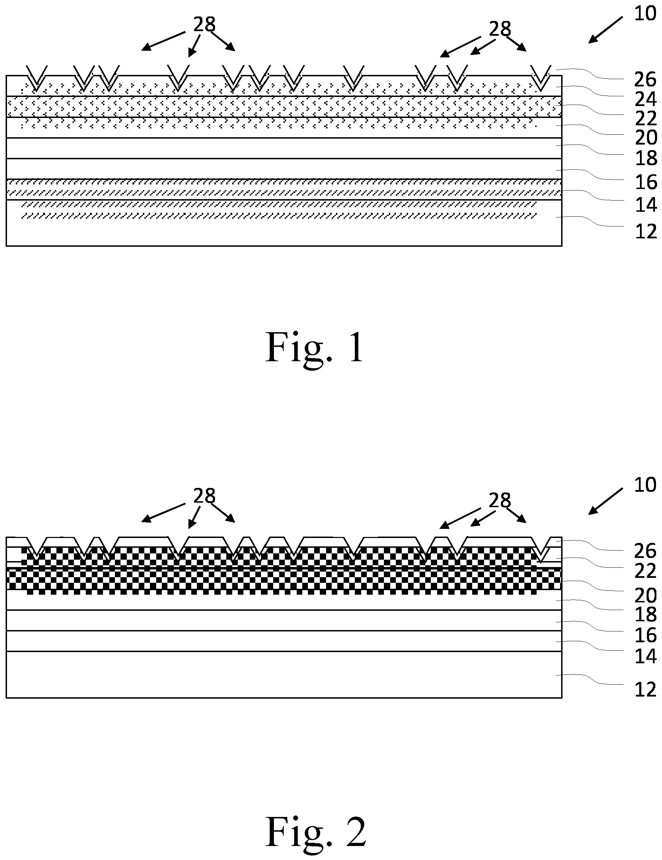

In den Figuren 1 bis 3 sind verschiedene Ausgestaltungen von Dekorpaneelen gezeigt. Dabei sollen die gleichen Bezugszeichen jeweils die gleichen oder vergleichbare Bauteile beziehungsweise Merkmale zeigen.

Fig. 1 zeigt eine erste Ausführungsform eines Dekorpaneels 10 gemäß der vorliegenden Erfindung. Das Dekorpaneel weist einen plattenförmigen Träger 12 auf. Der plattenförmige Träger 12 kann dabei in an sich bekannterweise für die Herstellung von Dekorpaneelen ausgestaltet sein. In Anhängigkeit des gewünschten Einsatzbereiches der Dekorpaneele ist der Träger aus unterschiedlichen Materialen gefertigt sein. So kann der Träger beispielsweise aus einem Holzwerkstoff bestehen beziehungsweise diesen aufweisen, sofern das Dekorpaneel keiner übermäßigen Feuchtigkeit oder Witterungsbedingungen ausgesetzt ist. Holzwerkstoffe im Sinne der Erfindung sind dabei neben Vollholzwerkstoffen auch Materialien wie z.B. Brettsperrholz, Brettschichtholz, Stabsperrholz, Funiersperrholz, Furnierschichtholz, Funierstreifenholz und Biegesperrholz. Darüber hinaus sind unter Holzwerkstoffen im Sinne der Erfindung auch Holzspanwerkstoffe wie z.B. Spanpressplatten, Strangpressplatten, Grobspanplatten Oriented Structural Board, (OSB) und Spanstreifenholz sowie auch Holzfaserwerkstoffe wie z.B. Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe Wood Plastic Composite, (WPC), Sandwichplatten aus einem leichten Kernmaterial wie Schaumstoff, Hartschaum oder Papierwaben und einer darauf aufgebrachten Holzschicht, sowie mineralisch, z.B. mit Zement, gebundene Holzspanplatten bilden Holzwerkstoffe im Sinne der Erfindung. Auch Kork stellt dabei einen Holzwerkstoff im Sinne der Erfindung dar. Auf dem plattenförmigen Träger 12 ist eine Primerschicht 14 aufgebracht. Bevorzugt kann die Primerschicht 14 etwa in einer Dicke von ≥ 10µm bis ≤ 60 µm aufgebracht sein. Dabei kann als Primer zur Herstellung der Primerschicht 14 eine flüssige strahlungshärtende Mischung auf Basis eines (Poly)-Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff vorliegen. Alternativ kann als Primer zur Herstellung der Primerschicht 14 eine thermisch härtende Zusammensetzung, wie beispielsweise eine Acryllack aufgebracht werden. Auch eine solche thermisch härtende Zusammensetzung kann einen Rheologiemittel wie einen Verdicker, Radikalfänger, Verlaufshilfsmittel, Entschäumer oder Konservierungsmittel, Pigment und/oder einen Farbstoff aufweisen. Oberhalb der Primerschicht 14 ist eine Druckempfangsschicht 16, 18 vorgesehen. Die Druckempfangsschicht 16, 18 kann dabei auch aus einer ersten Druckempfangsschicht 16 und einer zweiten Druckempfangsschicht 18 gebildet werden, die nacheinander aufgetragen werden. Zumindest auf einen Teilbereich der Druckempfangsschicht 16 ist eine Dekorschicht 20 aufgebracht. Bevorzugt wird zur Aufbringung der Dekorschicht 20 insbesondere mittels Direktdruckverfahren eine strahlungshärtbare Farbe und/oder Tinte eingesetzt. Strahlungshärtbar bedeutet dabei im Sinne der Erfindung, dass die Farbe und/oder Tinte mit elektromagnetischer Strahlung, wie z.B. UV-Strahlung oder Elektronenstrahlung gehärtet wird. Dabei kann es insbesondere vorgesehen sein, dass die Farbe und/oder Tinte entsprechende strahlungs- bzw. photoinduziert polymerisierende Bestandteile aufweist. Beispiele für geeignete Bestandteile sind Acrylate, Epoxide oder cyclische Amine, wie z.B. Ethylenimin. Die Dekorschicht 20 kann beispielsweise in einer Dicke in einem Bereich von ≥ 5µm bis ≤ 10µm aufgebracht sein. Zumindest auf einem Teilbereich der Dekorschicht 20 ist eine Nutzschicht 22 aufgebracht. Die Nutzschicht 22 ist erfindungsgemäß aus einer Polyethylenterephthalat-, Polypropylen-, einer Polyethylen- oder einer Polypropylen/Polyethylencopolymerfolie gebildet. Dabei kann die Polyethylenterephthalat-, Polypropylen-, Polyethylen- oder Polypropylen/Polyethylencopolymerfolie Füllstoffe und/oder Zuschlagsstoffe aufweisen, um beispielsweise die Verschleißfestigkeit der Folie weiter zu erhöhen, die Schlagzähigkeit der Folie oder das Brandverhalten zu verbessern. Die Folie kann grundsätzlich Füllstoffe enthalten, beispielsweise Talkum, Kalziumcarbonat (Kreide), Kaolin, Glimmer, Aluminiumoxid, Kieselgel oder Quarzmehl. Dabei kann die Konzentration des Füllstoffs in einem Bereich zwischen ≥5 Gew.-% und ≤40 Gew.-% liegen, bezogen auf die Gesamtmasse der Polyethylenterephthalat-, Polypropylen-, Polyethylen- oder Polypropylen/Polyethylencopolymerfolie in der Polymermasse. Die unterschiedlichen Füllstoffe erzielen dabei unterschiedliche Vorteile. Talkum steigert die Steifigkeit und Dimensionsstabilität der Folie, Kaolin verbessert die Oberflächenqualität und Glimmer führt neben einer verbesserten Dimensionsstabilität zu einer Verbesserung der Hitzebeständigkeit der Folie. Kreide kann insbesondere als sehr günstiger Füllstoff die Produktionskosten der Folie bei gleichzeitiger Verbesserung der Steifigkeit senken. Auch kann sie in bekannter Weise eingefärbt sein. Die Folie kann darüber hinaus bidirektional gereckt sein, um die Formstabilität der Folie zu verbessern. Auf zumindest einen Teilbereich der Nutzschicht 22 ist eine Lackschicht 24, 26 aufgebracht. Die Lackschicht 24, 26 kann als strahlungshärtebare oder zumindest teilweise strahlungshärtebare Zusammensetzung, beispielsweise auf Basis einen Acrylat-Lackes, eines Epoxid-Lackes, oder eines Urethanacrylates ausgebildet sein. Dabei kann es insbesondere bevorzugt sein, dass die Zusammensetzung nach dem Auftrag auf die Nutzschicht 22 in einem ersten Schritt strahlungsinduziert nur teilweise gehärtet wird und in die teilgehärtete Schicht eine mit dem Dekor übereinstimmende Oberflächenstrukturierung 28 eingebracht wird. Es kann vorgesehen sein, dass zwei Lackschichten 24, 26 aufgetragen werden, beziehungsweise dass die Lackschicht 24, 26 zweischichtig ausgestaltet ist. Dabei können die Schichten aus dem gleichen Material, insbesondere Lack, oder aus verschiedenen Materialien, wie insbesondere aus verschiedenen Lacken, gefertigt sein. Ein geeigneter Lack kann beispielsweise ein UV-härtender Lack, wie beispielsweise ein Acryllack beziehungsweise ein acrylbasierter Lack sein. Dabei kann eine untere Schutzschicht eine Struktur aufweisen und die obere Schutzschicht die untere Schutzschicht bedecken. In dieser Ausgestaltung kann es vorgesehen sein, dass die untere Schicht beim Auftrag eine vergleichsweise höhere Viskosität aufweist, um Strukturen auch vor dem Härten stabil halten zu können, und/oder dass die obere Schicht eine vergleichsweise niedrige Viskosität aufweist, um einen einheitlichen Abschluss bilden zu können. Ferner kann es vorgesehen sein, dass die untere Schicht eine größere Dicke aufweist als die obere Schicht. So kann die untere Lackschicht 24, die als Strukturlack dienen kann, etwa in einer Auftragsmenge von ≥ 30 g/m² bis ≤ 40 g/m² aufgetragen sein, wohingegen die obere Lackschicht 26, die als Decklack dienen kann, etwa in einer Auftragsmenge von ≥ 10 g/m² bis ≤ 15 g/m² aufgetragen sein kann.

In der Figur 2 ist eine weitere Ausgestaltung eines Dekorpaneels 10 gezeigt. Diese Ausgestaltung unterscheidet sich von der Ausgestaltung aus Figur 1 durch eine einzelne Lackschicht 26 oberhalb der Nutzschicht 24. Das Dekorpaneel weist einen plattenförmigen Träger 12 auf. Der plattenförmige Träger 12 kann dabei in an sich bekannterweise für die Herstellung von Dekorpaneelen ausgestaltet sein. Auf dem plattenförmigen Träger 12 ist eine Primerschicht 14 aufgebracht. Oberhalb der Primerschicht 14 ist eine Druckempfangsschicht 16, 18 vorgesehen. Zumindest auf einen Teilbereich der Druckempfangsschicht 16 ist eine Dekorschicht 20 aufgebracht. Zumindest auf einem Teilbereich der Dekorschicht 20 ist eine Nutzschicht 22 aufgebracht. Die Nutzschicht 22 ist erfindungsgemäß aus einer Polyethylenterephthalat-, Polypropylen-, einer Polyethylen- oder einer Polypropylen/Polyethylencopolymerfolie gebildet. Auf zumindest einen Teilbereich der Nutzschicht 22 ist eine Lackschicht 26 aufgebracht. Eine mit dem Dekor der Dekorschicht 20 übereinstimmende Oberflächenstrukturierung 28 ist vorgesehen. Dabei weist die Oberflächenstrukturierung 28 eine Strukturtiefe auf, die durch die Lackschicht 26 hindurch bis in die Nutzschicht 22 reicht.

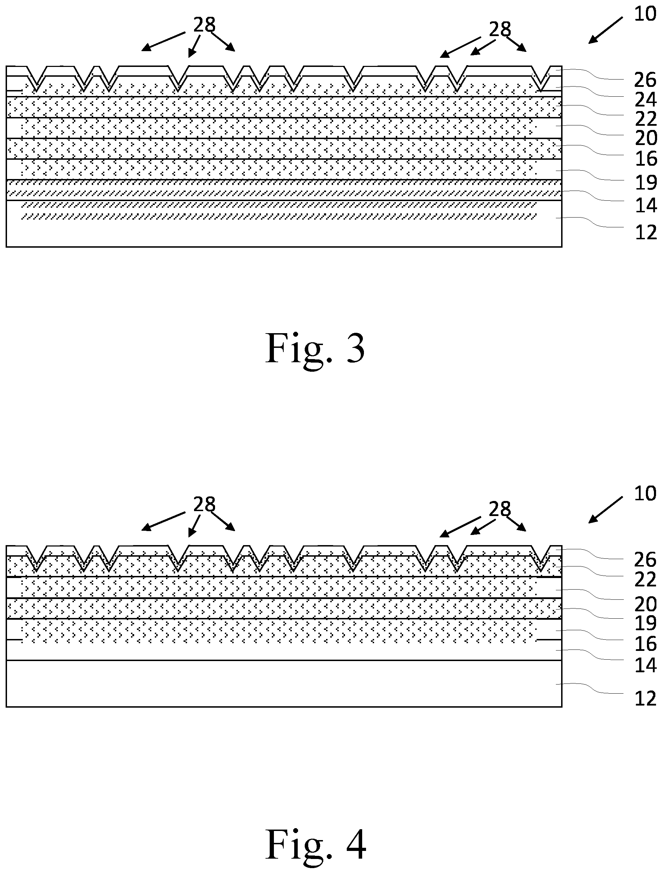

Die in der Figur 3 gezeigte Ausgestaltung eines Dekorpaneels 10 unterscheidet sich von der in Figur 1 gezeigten Ausführungsform dadurch, dass zwischen der Primerschicht 14 und der der Druckempfangsschicht 16 eine Dämpfungsschicht 19 vorgesehen ist. Bei der Dämpfungsschicht 19 kann es sich um eine Folienlage handeln, welche einen Biege-E-Modul ≤800 MPa aufweist oder auch um eine Schicht aus einem Naturstoff, wie beispielsweise Kork, welche mittels einer geeigneten Klebezwischenlage mit der jeweils im Schichtaufbau darunter und darüberliegenden Schicht verbunden ist. Im Falle einer Folienlage kann diese darüber hinaus zur Verbesserung der akustischen Dämpfungseigenschaften geschäumt sein. Dabei zeigt eine solche geschäumte Dämpfungsschicht 19 eine elastische Verformbarkeit mit einer möglichst hohen Rückstellkraft, so dass die Schicht nach Entlastung einer Lasteinwirkung wieder in ihre Ausgangsform zurückkehrt. Der plattenförmige Träger 12 kann dabei in an sich bekannterweise für die Herstellung von Dekorpaneelen ausgestaltet sein. Auf dem plattenförmigen Träger 12 ist eine Primerschicht 14 aufgebracht. Oberhalb der Primerschicht 14 ist eine Dämpfungsschicht 19 vorgesehen. Auf der Dämpfungsschicht 19 ist eine Druckempfangsschicht 16 vorgesehen. Zumindest auf einen Teilbereich der Druckempfangsschicht 16 ist eine Dekorschicht 20 aufgebracht. Zumindest auf einem Teilbereich der Dekorschicht 20 ist eine Nutzschicht 22 aufgebracht. Die Nutzschicht 22 ist erfindungsgemäß aus einer Polyethylenterephthalat-, Polypropylen-, einer Polyethylen- oder einer Polypropylen/Polyethylencopolymerfolie gebildet. Auf zumindest einen Teilbereich der Nutzschicht 22 ist eine mehrschichtige Lackschicht 24, 26 aufgebracht. Eine mit dem Dekor der Dekorschicht 20 übereinstimmende Oberflächenstrukturierung 28 ist vorgesehen.

Die in der Figur 4 gezeigte Ausgestaltung eines Dekorpaneels 10 unterscheidet sich von der in Figur 3 gezeigten Ausführungsform dadurch, dass zwischen der Druckempfangsschicht 16 und der Dekorschicht 20 eine Dämpfungsschicht 19 vorgesehen ist, welche gleichzeitig eine transparente Druckempfangsschicht ausbildet. Diese Dämpfungsschicht 19 kann dazu insbesondere mehrlagig ausgebildet sein und eine Schichtfolge A-B aufweisen, wobei die Folienlage A eine gute Anbindung an die angrenzende Druckempfangsschicht 16 bereitstellt, während die Folienlage B eine gute Anbindung zu den zur Herstellung der Dekorschicht 20 benutzten Tinten sicherstellt. Der plattenförmige Träger 12 kann dabei in an sich bekannterweise für die Herstellung von Dekorpaneelen ausgestaltet sein. Auf dem plattenförmigen Träger 12 ist eine Primerschicht 14 aufgebracht. Oberhalb der Primerschicht 14 ist eine Druckempfangsschicht 16 vorgesehen. Oberhalb der Druckempfangsschicht ist eine Dämpfungsschicht 19 vorgesehen. Zumindest auf einen Teilbereich der Dämpfungsschicht 19 ist eine Dekorschicht 20 aufgebracht. Zumindest auf einem Teilbereich der Dekorschicht 20 ist eine Nutzschicht 22 aufgebracht. Die Nutzschicht 22 ist erfindungsgemäß aus einer Polyethylenterephthalat-, Polypropylen-, einer Polyethylen- oder einer Polypropylen/Polyethylencopolymerfolie gebildet. Auf zumindest einen Teilbereich der Nutzschicht 22 ist eine Lackschicht 26 aufgebracht. Eine mit dem Dekor der Dekorschicht 20 übereinstimmende Oberflächenstrukturierung 28 ist vorgesehen, welche hinsichtlich ihrer Strukturtiefe bis in die Nutzschicht 22 hineinreicht.

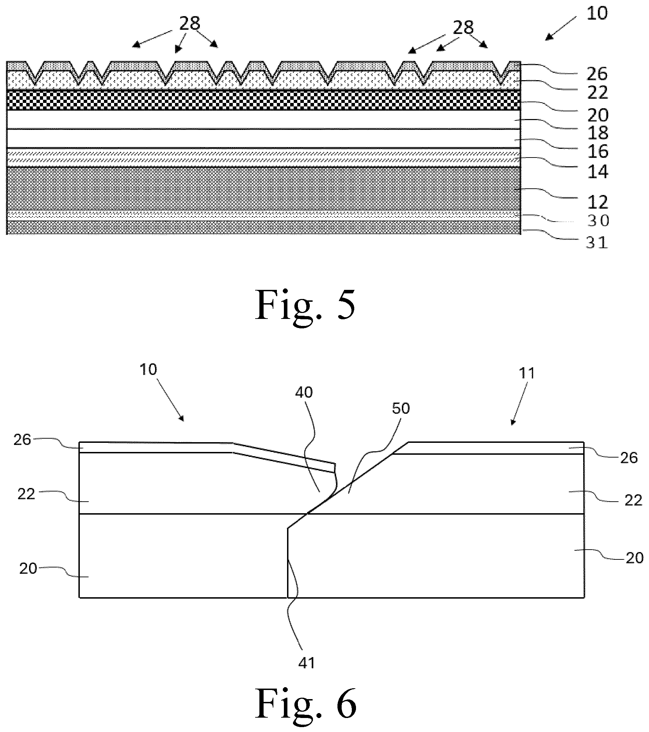

Die in der Figur 5 gezeigte Ausgestaltung eines Dekorpaneels 10 unterscheidet sich von der in Figur 3 gezeigten Ausführungsform dadurch, dass unterhalb des plattenförmigen Trägers 12 eine Trittschalldämmung 31 vorgesehen ist. Die Trittschalldämmung 31 ist dabei mittels einer Klebeschicht 30 an den plattenförmigen Träger 12 angebunden. Vorzugsweise ist die Trittschalldämmung 31 zumindest teilweise aus einem rezyklierten Material gebildet ist, vorzugsweise mit einem Rezyklatanteil ≥ 80 Gew.-%, weiter vorzugsweise ≥ 90 Gew.-%, insbesondere ≥ 95 Gew.-%. Die Klebeschicht 30 kann beispielsweise durch einen Hotmelt realisiert werden. Auf dem plattenförmigen Träger 12 ist eine Primerschicht 14 aufgebracht. Oberhalb der Primerschicht 14 ist eine Druckempfangsschicht 16 vorgesehen. Oberhalb der Druckempfangsschicht ist eine Dämpfungsschicht 19 vorgesehen. Zumindest auf einen Teilbereich der Dämpfungsschicht 19 ist eine Dekorschicht 20 aufgebracht. Zumindest auf einem Teilbereich der Dekorschicht 20 ist eine Nutzschicht 22 aufgebracht. Die Nutzschicht 22 ist erfindungsgemäß aus einer Polyethylenterephthalat-, Polypropylen-, einer Polyethylen-oder einer Polypropylen/Polyethylencopolymerfolie gebildet. Auf zumindest einen Teilbereich der Nutzschicht 22 ist eine Lackschicht 26 aufgebracht. Eine mit dem Dekor der Dekorschicht 20 übereinstimmende Oberflächenstrukturierung 28 ist vorgesehen, welche hinsichtlich ihrer Strukturtiefe bis in die Nutzschicht 22 hineinreicht.

Die in der Figur 6 gezeigte Ausgestaltung zweier erfindungsgemäßer Dekorpaneele 10, 11 mit im verbundenen Zustand kontaktschlüssigen Nutzschichten 22. Die Dekorpaneele 10, 11 weisen jeweils gegenüberliegende lange und kurze Kanten aufweist, welche mit Verbindungsmitteln zur Verbindung wenigstens zweier Dekorpaneele miteinander ausgebildet sind. Die Nutzschicht 22 des ersten Paneels 10 bildet an wenigstens einer Kante in Richtung der Kante einen Überstand 40 aus. Der Überstand 40 ragt derart über die unter der Nutzschicht 22 liegende Dekorschicht 20 hinaus, dass im verbundenen Zustand der Dekorpaneele 10, 11 miteinander die Nutzschichten 22 der verbundenen Dekorpaneele 10, 11 kontaktschlüssig aneinanderstoßen. Das zweite Dekorpaneel 11 weist einen Rücksprung 50 in der Nutzschicht 22 auf. Der Überstand 40 und der Rücksprung 50 sind derart ausgestaltet, dass im verbundenen Zustand der Dekorpaneele 10, 11 der Überstand 40 eine obere Stoßkante 41 zwischen den Dekorpaneelen 10, 11 überbrückt und an die Nutzschicht 22 des verbundenen Dekorpaneels im Bereich des Rücksprunges 50 kontaktschlüssig anstößt. Dabei sind der Überstand 40 und der Rücksprung 50 derart ausgestaltete, dass im verbundenen Zustand der Dekorpaneele 10 ,11 der Überstand 40 und der Rücksprung 50 eine sich überlappende V-förmige geschlossene Fuge ausbilden.

### Bezugszeichen:

- 10: Dekorpaneel
- 11: Dekorpaneel
- 12: plattenförmiger Träger
- 14: Primerschicht
- 16: Druckempfangsschicht
- 18: zweite Druckempfangsschicht
- 19: Dämpfungsschicht
- 20: Dekorschicht
- 22: Nutzschicht24 erste Lackschicht
- 26: zweite Lackschicht
- 28: Struktur
- 30: Klebeschicht
- 31: Trittschalldämmung
- 40: Überstand
- 41: Stoßkante
- 50: Rücksprung

## Patentansprüche

1. Dekorpaneel, aufweisend einen Schichtaufbau mit wenigstens
- einem plattenförmigen Träger (12),
- eine zumindest auf einen Teilbereich des plattenförmigen Trägers (12) aufgebrachte Primerschicht (14),
- eine zumindest auf einen Teilbereich der Primerschicht (14) aufgebrachte Druckempfangsschicht (16),
- eine zumindest auf einem Teilbereich der Druckempfangsschicht (16) aufgebrachte Dekorschicht (20),
- eine zumindest auf einem Teilbereich der Dekorschicht (20) aufgebrachte Nutzschicht (22), sowie
- eine auf zumindest einen Teilbereich der Nutzschicht (22) aufgebrachte Lackschicht (26), **dadurch gekennzeichnet, dass** der plattenförmige Träger (12) aus einem Holzwerkstoff und die Nutzschicht (22) aus einer Polyethylenterephthalat-, Polypropylen-, einer Polyethylen- oder einer Polypropylen/Polyethylencopolymerfolie gebildet ist.

2. Dekorpaneel nach Anspruch 1, **dadurch gekennzeichnet, dass** der Holzwerkstoff des plattenförmigen Trägers (12) aus einer Gruppe ausgewählt ist, bestehen Brettsperrholz, Brettschichtholz, Stabsperrholz, Funiersperrholz, Furnierschichtholz, Funierstreifenholz und Biegesperrholz, Spanpressplatten, Strangpressplatten, Grobspanplatten (Oriented Structural Board, OSB), Spanstreifenholz, Holzfaserdämmplatten (HFD), mitteldichte Faserplatten (MDF) und hochdichte Faserplatten (HDF).

3. Dekorpaneel nach Anspruch 1 oder 2, **dadurch gekennzeichnet, dass** die Polypropylenfolie eine Stärke in einem Bereich zwischen ≥ 0,05mm und ≤ 20 mm, bevorzugt zwischen ≥ 0,1mm und ≤ 10 mm, weiter bevorzugt ≥ 0,2mm und ≤ 1mm, insbesondere zwischen ≥ 0,25mm und ≤ 0,4mm aufweist.

4. Dekorpaneel nach einem der vorhergehenden Ansprüche, **dadurch gekennzeichnet, dass** die Primerschicht (14) wenigstens ein Material aus der Gruppe bestehend aus einer wasserbasierten Lackzusammensetzung, einer strahlungshärtbaren Lackzusammensetzung und einem Hotmelt aufweist.

5. Dekorpaneel nach einem der vorhergehenden Ansprüche, **dadurch gekennzeichnet, dass** die Druckempfangsschicht (16) aus einer wässrigen oder strahlungshärtbaren Lackzusammensetzung gebildet ist.

6. Dekorpaneel nach Anspruch 5, **dadurch gekennzeichnet, dass** Druckempfangsschicht (16) durch einem Mehrfachauftrag entsprechender Lackzusammensetzungen ausgebildet wird, optional unter zumindest teilweiser Härtung einer Schicht vor Auftrag einer weiteren Schicht.

7. Dekorpaneel nach Anspruch 6, **dadurch gekennzeichnet, dass** die Lackschicht (26) mit einer Strukturierung versehen ist.

8. Dekorpaneel nach Anspruch 7, **dadurch gekennzeichnet, dass** die Tiefe der Struktur der Lackschicht (26) bis in die Nutzschicht (22) reicht.

9. Dekorpaneel nach einem der vorhergehenden Ansprüche, **dadurch gekennzeichnet, dass** der Träger (12) auf der der Primerschicht (14) gegenüberliegenden Unterseite des Träger (12) eine Trittschalldämmung (31) aufweist.

10. Dekorpaneel nach Anspruch 9, **dadurch gekennzeichnet, dass** zwischen der Unterseite des Trägers (12) und der Trittschalldämmung (31) einer Klebeschicht (30) angeordnete ist, wobei die Klebeschicht vorzugsweise aus einem Hotmelt gebildet wird.

11. Dekorpaneel nach einem der Ansprüche 9 und 10, **dadurch gekennzeichnet, dass** die Trittschalldämmung (31) zumindest teilweise aus einem rezyklierten Material gebildet ist, vorzugsweise mit einem Rezyklatanteil ≥ 80 Gew.-%, weiter vorzugsweise ≥ 90 Gew.-%, insbesondere ≥ 95 Gew.-%.

12. Dekorpaneel nach einem der vorherigen Ansprüche, **dadurch gekennzeichnet, dass** die Dekorschicht (20) mittels eines Digitaldruckverfahrens, vorzugsweise mittels eines Tintenstrahldruckverfahrens aufgebracht ist.

13. Dekorpaneel nach Anspruch 12, **dadurch gekennzeichnet, dass** die Dekorschicht (20) aus einer gehärteten strahlungshärtbaren Tintenzusammensetzung besteht.

14. Dekorpaneel nach einem der vorhergehenden Ansprüche, wobei das Dekorpaneel jeweils gegenüberliegende lange und kurze Kanten aufweist, welche mit Verbindungsmitteln zur Verbindung wenigstens zweier Dekorpaneele miteinander ausgebildet sind, **dadurch gekennzeichnet, dass** zumindest die Nutzschicht (22) an wenigstens einer Kante in Richtung der Kante einen Überstand (40) ausbildet, welcher derart über die unter der Nutzschicht (22) liegende Dekorschicht (20) hinausragt, dass im verbundenen Zustand zweier Dekorpaneele miteinander die Nutzschichten (22) der verbundenen Dekorpaneele kontaktschlüssig aneinanderstoßen.

15. Dekorpaneel gemäß Anspruch 14, **dadurch gekennzeichnet, dass** das Dekorpaneel an jeweils einer langen und einer kurzen Kante den Überstand (40) aufweist und an den jeweils anderen langen und kurzen Kanten einen Rücksprung (50) in der Nutzschicht (22) aufweist, wobei der Überstand (40) und der Rücksprung (50) derart ausgestaltet sind, dass im verbundenen Zustand zweier Dekorpaneele der Überstand (40) eine obere Stoßkante (41) zwischen den Dekorpaneelen überbrückt und an die Nutzschicht (22) des verbundenen Dekorpaneels im Bereich des Rücksprunges (50) kontaktschlüssig anstößt.

16. Dekorpaneel gemäß Anspruch 15, **dadurch gekennzeichnet, dass** der Überstand (40) und der Rücksprung (50) derart ausgestaltete sind, dass im verbundenen Zustand zweiter Dekorpaneele der Überstand (40) und der Rücksprung (50) eine sich überlappende V-förmige geschlossene Fuge ausbilden.
